# EUROPÄISCHE PATENTANMELDUNG

(11) **EP 2 327 542 A1**
(43) Veröffentlichungstag der Anmeldung: **01.06.2011**
(21) Anmeldenummer: 09014789.3
(22) Anmeldetag: 27.11.2009
(51) Int. Cl.: B32B 15/20, B32B 15/04, B32B 9/04, F28F 21/02, B32B 3/02, B32B 7/12

(54) **Mehrlagiges flexibles Wärmeleitlaminat**

(71) Anmelder: Kerafol Keramische Folien GmbH, 92676 Eschenbach/Opf. (DE)
(72) Erfinder: Koppe, Franz, 92676 Eschenbach (DE); Haas, Werner, 91257 Pegnitz (DE); Landes, Volker, 92637 Weiden (DE)
(74) Vertreter: Hafner, Dieter

(57) **Zusammenfassung**

Die Erfindung betrifft ein mehrlagiges flexibles Wärmeleitlaminat 1 bestehend aus einer ersten Grafitfolien-Lage 2, einer von der ersten Lage 2 zumindest bereichsweise beabstandeten zweiten Grafitfolien-Lage 3 sowie einer Zwischenlage 4, die zwischen der ersten und der zweiten Grafitfolien-Lage 2, 3 angeordnet ist, wobei die erste Grafitfolien-Lage 2, die Zwischenlage 4 und die zweite Grafitfolien-Lage 3 miteinander laminiert sind.

## Beschreibung

Die Erfindung betrifft Wärmeleitmaterial, das eine Grafitschicht umfasst zur Ableitung von Wärme.

Aus dem Stand der Technik sind derartige Wärmeleitmaterialien, beispielsweise in Form von Wärmeleitfolien, bekannt. Diese bestehen aus Grafit und leiten insbesondere in X- und Y-Richtung (innerhalb der Ebene der Folie) gut ab.

Der Erfindung liegt die Aufgabe zugrunde, ein Wärmeleitmaterial in Form eines mehrlagigen flexiblen Wärmeleitlaminats mit den Merkmalen des Oberbegriffs des Anspruches 1 derart weiterzubilden, dass das Wärmeleitmaterial sowohl eine zuverlässige Wärmeleitung in X- und Y-Richtung (innerhalb der Folienebene) als auch in Z-Richtung (senkrecht zur Haupterstreckungsebene des Laminats) gewährleistet. Ferner ist es Aufgabe der Erfindung, das mehrlagige flexible Wärmeleitlaminat derart auszubilden, dass dieses einen im Vergleich zu herkömmlichen Grafitfolien eine höhere Flexibilität aufweist, ohne dass das Wärmeleitlaminat bzw. die in ihm befindliche Grafitschicht reißt und/oder zerstört wird. Darüber hinaus ist es Aufgabe der Erfindung, neben einem zuverlässigen Wärmeleiteffekt das Wärmeleitlaminat derart auszubilden, dass dieses eine Abschirmwirkung gegenüber elektrischer, elektromagnetischer oder magnetischer Felder aufweist.

Als Kern der Erfindung wird es angesehen, dass das mehrlagige flexible Wärmeleitlaminat aus einer ersten Grafitfolien-Lage, einer von der ersten Lage zumindest bereichsweise beabstandeten zweiten Grafitfolien-Lage sowie einer Zwischenlage besteht, die zwischen der ersten und der zweiten Lage angeordnet ist, wobei die erste Lage, die Zwischenlage und die zweite Lage miteinander laminiert sind. Dadurch, dass eine laminierte Verbindung zwischen einer Grafitfolien-Lage und einer Zwischenlage gebildet wird, wird das daraus gebildete Laminat flexibler gegenüber einer reinen Grafitfolie. Dies bedeutet, dass mit einem derartigen Laminat von einer Grafitfolien-Lage mit einer Zwischenlage und einer weiteren Grafitfolien-Lage dieses Laminat stärker gebogen werden kann (kleinere Biegewinkel) bis das Laminat durch Biegung bricht, die Zwischenlage wirkt stützend auf die Grafitfolien-Lagen. Insbesondere die Grafitfolie ist an sich eher spröde, jedoch durch die Verbindung mit einer Zwischenlage kann bei einer Sandwich-Bauweise (Grafitfolie-Zwischenlage-Grafitfolie) ein flexibles Laminat erreicht werden.

In einer bevorzugten Ausführungsform sind die beiden Grafitfolien-Lagen über das gesamte Laminat voneinander beabstandet. Eine lediglich bereichsweise Beabstandung wird z.B. durch eine gitterartige Zwischenlage erreicht, wobei in Bereichen der Gitterlöcher die Grafitfolien-Lagen sich gegenseitig berühren und im Bereich der Gitterstreben durch diese voneinander beabstandet sind.

Darüber hinaus wird es ermöglicht, dass mittels der Zwischenlage ein Laminat geschaffen wird, das einen Doppeleffekt aufweist, einerseits wird durch die Zwischenlage ein leichteres und flexibles Verbiegen der Grafitfolien-Lage und zum Weiteren eine Abschirmfunktion gegenüber elektrischer, magnetischer und/oder elektromagnetischer Felder (insbesondere in Hinblick auf eine elektromagnetische Verträglichkeit EMV) erreicht.

Der Kerngedanke der Erfindung ist nicht auf eine Sandwich-Bauweise bestehend aus lediglich zwei Grafitfolien und einer Zwischenlage begrenzt, sondern auf eine beliebige Aneinanderreihung mehrerer Grafitfolien-Lagen, die jeweils zwischen sich eine Zwischenlage aufweisen.

In einer weiteren vorteilhaften Ausflihrungsforin weist das Wärmeleitlaminat eine Wärmeleitfähigkeit senkrecht zur Haupterstreckungsebene des Wärmeleitlaminats (Z-Richtung) von mindestens 3 W/mK, insbesondere mindestens 5 W/mK, insbesondere mindestens 6 W/mK auf. Die Wärmeleitfähigkeit in X- und/oder Y-Richtung (in der Ebene des Wärmeleitlaminats) ist um ein Vielfaches größer als die Wärmeleitfähigkeit senkrecht zur Haupterstreckungsebene (Z-Ebene) des Wärmeleitlaminats.

Vorteilhafterweise beträgt die Gesamtdicke des Wärmeleitlaminats zwischen 0,10 und 5,00 mm, insbesondere zwischen 0,25 und 0,50 mm. Die Fertigung des erfindungsgemäßen Wärmeleitlaminats in diesen Dickebegrenzungen hat sich als besonders vorteilhaft insbesondere für die Biegeeigenschaften erwiesen.

Darüber hinaus ist es vorteilhaft, wenn die Zwischenlage eine Dicke von 0,010 und 0,500 mm, insbesondere eine Schichtdicke von 0,016 bis 0,020 mm aufweist. Eine aus diesem Dickebereich gefertigte Zwischenlage ermöglicht bei dem erfindungsgemäßen Wärmeleitlaminat eine gute Flexibilität bei gleichzeitig ausreichender Wärmeableitung durch die laminierten Grafitfolien-Lagen. Insbesondere, wenn die Dicke der Zwischenlage 1 bis 15 %, insbesondere 3 bis 7 % der Gesamtdicke des Wärmeleitlaminats beträgt, ist ein vorteilhaftes Verhältnis von Flexibilität und Wärmeleiteigenschaft des Wärmeleitlaminats erreicht.

In einer weiteren bevorzugten Ausführungsform weist das Wärmeleitlaminat einen thermischen Widerstand senkrecht zur Haupterstreckungsebene des Wärmeleitlaminats (Z-Richtung) von 0,08 bis 0,50 K/W, insbesondere von 0,14 bis 0,18 K/W auf.

Bevorzugt besteht die Zwischenlage zumindest bereichsweise aus Metall, das eine spezifische Leitfähigkeit von wenigstens 3 x 10⁵ Ω⁻¹ cm⁻¹ bei 20°C aufweist.

Alternativ zum Metall können auch Zwischenlagen aus einem Kunststoff wie z.B. einem thermoplastischen oder elastomeren Kunststoff gebildet sein.

Als bevorzugte Metalle für die Zwischenlage hat sich die Verwendung von Kupfer und/oder Silber bewährt. Insbesondere bei der Verwendung von Kupfer und/oder Silber ist deren oberflächliche Behandlung von Vorteil. Beispielsweise erfährt die aus Kupfer bestehende Zwischenlage vor dem Laminierungsprozess eine elektrolytische Behandlung. Auch bei der Verwendung anderer Metalle als Kupfer und/oder Silber oder bei der Verwendung von Kunststoffen kann deren oberflächliche Behandlung von Vorteil sein. Die Oberflächenbehandlung der Zwischenlage kann z.B. zur Erhöhung deren Rauheitsgrades verwendet werden. Vorteilhafterweise wird zumindest die Zwischenlage einer Oberflächenbehandlung (z.B. Prägen, Bürsten, Hobeln, Stoßen, Feilen, Raspeln, Bürstspanen, Schaben, Schleifen, Hohnern, Strahlspanen [z.B. Kugelstrahlen, Sandstrahlen], Nitrieren, Borieren, Chromieren, Kolsterisieren, Choronabehandlung, Beschichten [z.B. lackieren] und/oder elektromagnetische Behandlung) unterzogen. Ziel der Oberflächenbehandlung kann beispielsweise eine Aufrauung der Oberfläche darstellen, durch welche die Verbindung der Grafitfolien-Lagen mit der Zwischenlage gefördert wird. Beispielsweise wird durch die aufgeraute Oberfläche der Zwischenlage mit den Grafitfolien-Lagen eine form- und/oder stoffschlüssige Verbindung (z.B. eine Verzahnung) erwirkt.

Insbesondere, wenn die Zwischenlage an ihrer Oberfläche einen höheren Rauheitsgrad aufweist, als die erste und/oder die zweite Grafitfolien-Lage wird hierdurch eine innige und zuverlässige Verbindung während des Zusammenbringens der Grafitfolien-Lagen der Zwischenlage erreicht, da sich die oberflächlichen Hervorhebungen der Zwischenlage in die Grafitfolien-Lagenoberfläche "hineinbohrt".

Alternativ und/oder zusätzlich können neben der auf die Oberflächenrauheit zurückzuführenden verbindungsfördernden Wirkungen (Verzahnung) der aufgerauten Oberfläche auch elektrostatische und/oder stoffschlüssige (z.B. klebende) Verbindungsarten wirken.

Hierzu kann es vorteilhaft sein, wenn zwischen einer Grafitfolien-Lage und einer Zwischenlage ein Primer, Kleber und/oder ein Anlösemittel angeordnet ist. Die Aufgabe des Primers, Klebers und/oder des Anlösemittels sind in der Förderung der Verbindung von Grafitfolien-Lage und Zwischenlage zu sehen. Beispielsweise kann durch ein Anlösemittel die Oberfläche der Zwischenlage angelöst werden, so dass beim Zusammenführen der Grafitfolien-Lage an die angelöste Oberfläche der Zwischenlage eine innige Verbindung zwischen den Lagen erwirkt werden.

Um eine Schirmwirkung bezüglich der elektrischen, magnetischen und/oder elektromagnetischen Felder zu erreichen, ist es vorteilhaft, wenn die Zwischenlage aus einem Material und/oder einer Geometrie gewählt ist, die eine höhere Schirmwirkung aufweist, als die Grafitfolien-Lage. Insbesondere bei der Verwendung von Kupfer und/oder Silber oder anderer Materialien mit einer möglichst niedrigen Permeabilitätszahl, vorzugsweise mit einer Permeabilitätszahl von < 1500. Insbesondere ist es vorteilhaft, ein Material für die Zwischenlage zu wählen, dessen Permeabilitätszahl < 5 liegt. Beispielsweise ist die zumindest bereichsweise Verwendung von Kupfer, Platin, Wasserstoff, Aluminium, Kobalt, Blei oder Zinn eine bevorzugte Wahl für das Material der Zwischenlage, um eine hohe Schirmwirkung gegenüber magnetischen Feldern zu erreichen.

Darüber hinaus ist es vorteilhaft, wenn die Zwischenlage zumindest bereichsweise von den Folienlagen freiliegt. Hierbei kann es vorgesehen sein, dass die Grafitfolien-Lagen nach Art eines Sandwiches die Zwischenlage umgeben und die Zwischenlage an Ausnehmungen der Grafitfolien-Lagen und/oder randseitig freiliegen. Beispielsweise kann die Zwischenlage am Rand über die Grafitfolien-Lagen herausragen. Insbesondere wenn als Zwischenlage ein leitendes Material, wie beispielsweise Kupfer verwendet wird, können die über die Grafitfolien-Lagen überstehenden oder freiliegenden Kupferschichtbereiche komfortabel als beispielsweise Anschlussbereiche verwendet werden, um die Zwischenlage als Stromleiter zu verwenden und Zuleitungen an die Anschlussbereiche anzuschließen.

Ferner liegt dem mehrlagigen flexiblen Wärmeleitlaminat ein erfindungsgemäßes Verfahren zum Herstellen eines solchen zugrunde, wobei das Wärmeleitlaminat aus zwei Grafitfolien-Lagen und wenigstens einer dazwischen angeordneten Zwischenlage besteht, wobei zunächst eine erste Grafitfolien-Lage mit der Zwischenlage durch Kalandrierung miteinander verbunden wird und eine nachfolgend gebildete Schicht aus der ersten Grafitfolien-Lage und der Zwischenlage mit einer zweiten Grafitfolien-Lage auf der ersten Grafitfolien-Lage gegenüberliegenden Seite der Zwischenlage durch Kalandrieren verbunden wird und wobei die Grafitfolien-Lage in nicht hoch verdichteten Zustand dem Kalandriervorgang zugeführt wird.

Insbesondere dadurch, dass die Grafitfolien-Lage in einem nicht hoch verdichteten Zustand (dies bedeutet, dass bei Durchlaufen der Grafitfolien-Lagen innerhalb eines Kalandrierungsprozesses eine weitere Verdichtung der Grafitfolien-Lage und damit eine Dichtereduktion von wenigstens 10 % erreichbar ist) durchgeführt wird, kann eine Dickenreduktion des Ausgangsproduktes des Herstellungsverfahrens gegenüber der dem Herstellungsverfahren zugegebenen akkumulierten Ausgangsdicken der Grafitfolien-Lagen und der Zwischenlage von wenigstens 10 % erreicht werden. Durch diese Dickereduktion während des Herstellungsverfahrens wird insbesondere bei einer Zwischenlage, deren Oberfläche durch einen Oberflächenbehandlungsschritt aufgeraut wurde, eine zuverlässigere Verbindung der Zwischenlage mit den Grafitfolien-Lagen erreicht. Insbesondere wird durch die Kalandrierung die Oberflächenrauheit der Zwischenlage mit den Oberflächen der auflcalandrierten Grafitfolien-Lagen in Form eines Formschlusses bzw. in Form einer Verzahnung eine innige Verbindung eingehen.

Darüber hinaus liegt der Erfindung die Verwendung eines flexiblen Wärmeleitlaminats nach einem der Ansprüche 1 - 13 zugrunde, wobei in einer Stanzvorrichtung zur Herstellung von Wärmeleitlaminatabschnitten oder Ausnehmungen in Wärmeleitlaminatabschnitten das erfindungsgemäße Wärmeleitlaminat verwendet wird.

Auch kann die Zwischenlage als Kompositgewebe aus Metallen und nichtleitenden Material gebildet sein.

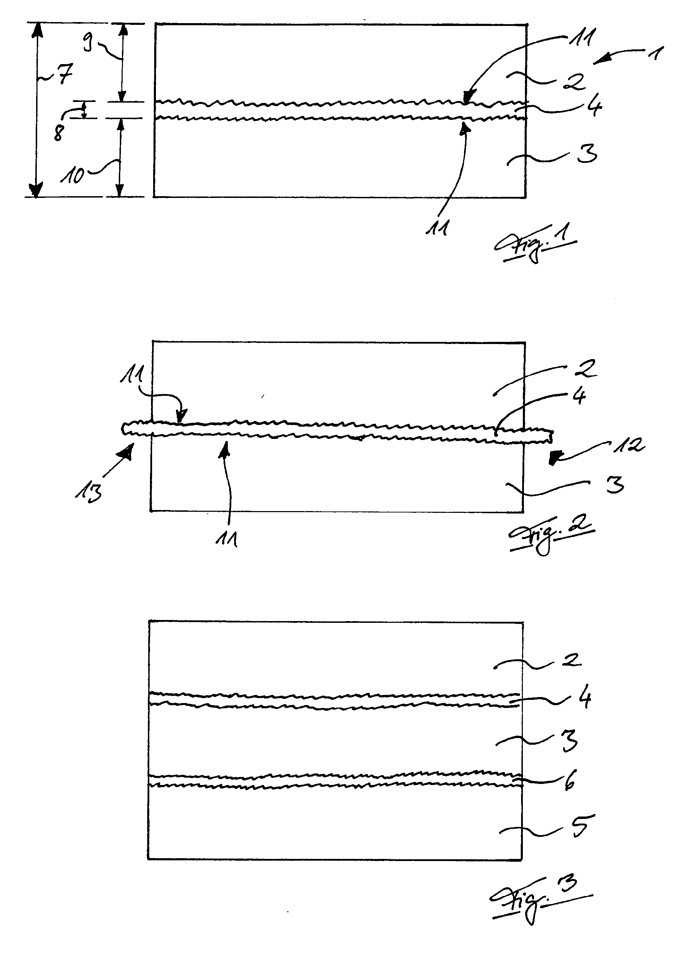

Die Erfindung ist anhand von Ausführungsbeispielen in den Zeichnungsfiguren näher erläutert. Diese zeigen
- Fig. 1: eine schematische Schnittdarstellung des erfindungsgemäßen Wärmeleitlaminats;
- Fig. 2: eine schematische Schnittdarstellung einer alternativen Ausführungsform des Wärmeleitlaminats;
- Fig. 3: eine schematische Schnittdarstellung eines Wärmeleitlaminats bestehend aus drei Grafitfolien-Lagen sowie zwei Zwischenlagen;

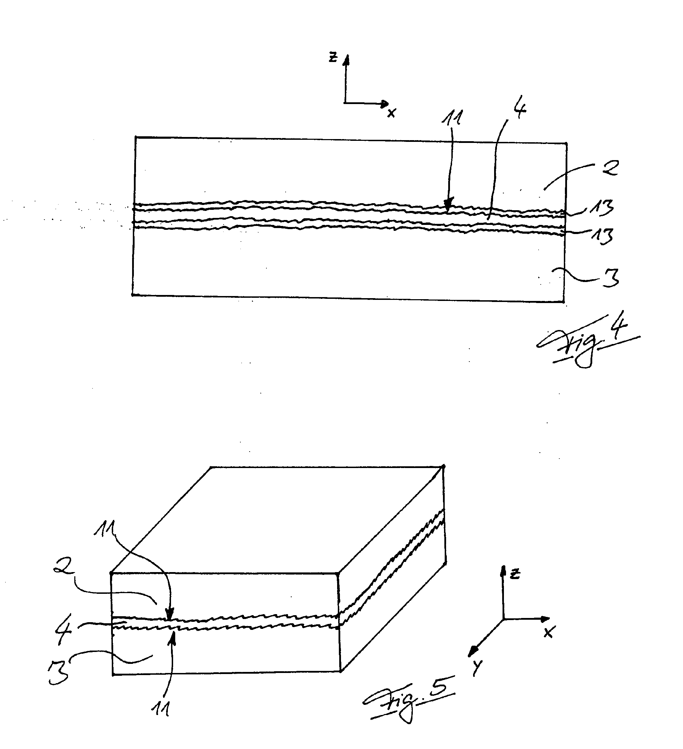

- Fig. 4: eine schematische Schnittdarstellung eines Wärmeleitlaminats mit Primer-Schichten;
- Fig. 5: eine schematische perspektivische Darstellung eines Wärmeleitlaminats gemäß Fig. 1.

In Zeichnungsfigur 1 ist ein mehrlagiges flexibles Wärmeleitlaminat 1 bestehend aus einer ersten Grafitfolien-Lage 2, einer von der ersten Grafitfolien-Lage 2 zumindest bereichsweise beabstandeten zweiten Grafitfolien-Lage 3 sowie einer Zwischenlage 4, die zwischen der ersten und der zweiten Grafitfolien-Lage 2, 3 angeordnet ist, wobei die erste Grafitfolien-Lage 2 die Zwischenlage 4 und die zweite Grafitfolien-Lage 3 miteinander laminiert sind.

Gemäß Zeichnungsfigur 3 weist das Wärmeleitlaminat 1 wenigstens drei Grafitfolien-Lagen 2, 3, 5 auf, wobei zwischen den Grafitfolien-Lagen 2, 3, 5 jeweils eine Zwischenlage 4, 6 angeordnet ist. Somit ist zwischen der ersten Grafitfolien-Lage 2 und der zweiten Grafitfolien-Lage 3 eine Zwischenlage 4 und zwischen der zweiten Grafitfolien-Lage 3 und der dritten Grafitfolien-Lage 5 eine Zwischenlage 6 angeordnet. Die Materialien, Dicken der einzelnen Grafitfolien-Lagen 2, 3, 5 oder der Zwischenlagen 4, 6 können unterschiedlich ausgebildet sein.

In Zeichnungsfigur 1 ist auf der linken Seite ferner die Gesamtdicke 7 des Wärmeleitlaminats 1 dargestellt. Diese Gesamtdicke 7 des Wärmeleitlaminats 1 beträgt vorzugsweise zwischen 0,10 und 5,00 mm, insbesondere zwischen 0,25 und 0,50 mm. Hierbei kann ferner aus Zeichnungsfigur 1 entnommen werden, dass es vorteilhaft ist, wenn die Zwischenlage 4, 6 eine Dicke 8 von 0,010 und 0,500 mm, insbesondere eine Schichtdicke 8 von 0,016 bis 0,020 mm aufweist. Damit ist erkennbar, dass die Dicke 9, 10 der ersten Grafitfolien-Lage 2 und der zweiten Grafitfolien-Lage 3 eine höhere Dicke 9, 10 aufweisen, als die Dicke 8 der Zwischenlage 4, 6. Insbesondere ist es vorteilhaft, wenn die Dicke 8 der Zwischenlage 4, 6 maximal 15 %, insbesondere maximal 7 % der Gesamtdicke 7 des Wärmeleitlaminats 1 beträgt. Grundsätzlich können die Dicke 9, 10 der ersten und zweiten Grafitfolien-Lage 2, 3 innerhalb eines Wärmeleitlaminats 1 unterschiedlich gewählt sein. Beispielsweise wird das Wärmeleitlaminat 1 auf eine Platine, einen Prozessor oder allgemein auf eine elektronische Steuereinheit aufgelegt, um die dort vorgefundene Wärme schneller abzuführen. In diesem Fall ist es vorteilhaft, wenn das Wärmeleitlaminat 1 mit seiner Grafitfolien-Lage 2, 3, die eine größere Dicke 8, 9 aufweist, als die weitere Grafitfolien-Lage 2, 3, zu der elektronischen, wärmeabzuführenden Einrichtung gerichtet ist.

Ferner hat es sich bei Tests als vorteilhaft erwiesen, wenn der Betrag der Dicke 8 der Zwischenlage 4, 6 maximal 15 %, insbesondere maximal 10 % des Betrages der Dicke 9, 10 wenigstens einer angrenzenden ersten und/oder zweiten Grafitfolien-Lage 2, 3 entspricht.

Die Zwischenlage 4, 6 ist — wie in den Zeichnungsfiguren ersichtlich ―an ihrer Oberfläche 11 aufgeraut. Grundsätzlich wird die Oberfläche 11 der Zwischenlagen 4, 6 bereits vor dem Laminierungsprozess mit den Grafitfolien-Lagen 2, 3, 5 einer Oberflächenbehandlung unterzogen, die der Oberfläche 11 einen höheren Rauheitsgrad verschafft, als es die Oberflächen der ersten und/oder der zweiten Grafitfolien-Lage 2, 3 aufweisen. Während des Aneinanderpressens der ersten und der zweiten Grafitfolien-Lage 2, 3 an die Zwischenlage 4, 6 passen sich die kontaktierenden Oberflächen der Grafitfolien-Lagen 2, 3 an die Struktur der Oberfläche 11 der Zwischenlagen 4, 6 an. Vorzugsweise sind die Grafitfolien-Lagen 2, 3 weicher als die Zwischenlage 4, 6.

In Zeichnungsfigur 2 ist die Zwischenlage 4, 6 randseitig von den Grafitfolien-Lagen 2, 3, 5 freigelegt. Diese überstehenden Abschnitte 12, 13 der Zwischenlage 4, 6 können als Anschlussstellen zum Erzeugen einer Wirkverbindung mit beispielsweise Leitungskabeln (nicht dargestellt) verwendet werden. Neben der dargestellten randseitigen Freilegung der Zwischenlage 4, 6 relativ zu den Grafitfolien-Lagen 2, 3, 5 können auch innerhalb der Grafitfolien-Lage 2, 3, 5 Ausnehmungen vorgesehen sein, die in der ebenen Erstreckung der Grafitfolien-Lage 2, 3, 5 abschnittsweise die Zwischenlage 4, 6 freigibt. Die freiliegenden Bereiche der Zwischenlage 4, 6 können zusätzlich oder alternativ auch als Heat-Spreader oder Wärmeableitungselement wirken. Zum Beispiel kann die freiliegende Zwischenlage mit einem Kühlmedium beaufschlagt oder in Kontakt gebracht werden.

Diese Sandwich-Bauweise des erfindungsgemäßen Wärmeleitlaminats 1 ist nicht lediglich auf eine Verwendung von zwei Grafitfolien-Lagen 2, 3 und einer Zwischenlage 4 beschränkt, sondern kann sich auf beliebig viele Grafitfolien-Lagen 2, 3, 5 und zwischen denen befindlichen Zwischenlagen 4, 6 erstrecken. Beispielsweise ist in Zeichnungsfigur 3 eine Ausführung dargestellt, die aus drei Grafitfolien-Lagen 2, 3, 5 sowie zwischen ihnen angeordneten Zwischenlagen 4, 6 gebildet wird. Grundsätzlich ist eine beliebige Erweiterung mit jeweils einer Zwischenlage und einer Grafitfolien-Lage ausführbar.

In der in Zeichnungsfigur 4 dargestellten Ausführungsform sind zwischen der ersten Grafitfolien-Lage 2 und der Zwischenlage 4 sowie zwischen der zweiten Grafitfolien-Lage 3 und der Zwischenlage 4 ein Primer 13 angeordnet. Der Primer 13 kann beispielsweise ein Kleber, ein Anlösemittel, eine aufgesprühte oder anderweitig aufgebrachte Grundierung, wie beispielsweise Wasser oder Alkohol umfassen. Die in Zeichnungsfigur 4 dargestellte Schnittdarstellung des Wärmeleitlaminats kann den Zustand in stark schematisierter Weise vor oder nach dem Laminierungsprozess darstellen. Dies bedeutet, dass der Primer 13 nicht zwangsläufig nach dem Laminierungsprozess des Wärmeleitlaminats 1 erkennbar sein muss.

In Zeichnungsfigur 5 ist ein Koordinatenkreuz mit den Achsen X, Y und Z neben einem perspektivisch dargestellten Wärmeleitlaminat 1 dargestellt. Hieraus geht hervor, dass die Haupterstreckungsebene des Wärmeleitlaminats 1 in der X-, Y-Ebene liegt. Grundsätzlich ist bei Grafitfolien der Wärmetransport innerhalb der X-, Y-Ebene sehr stark ausgeprägt. Darüber hinaus ist es ein Ergebnis des erfindungsgemäßen Wärmeleitlaminats 1, dass auch in Z-Richtung eine signifikante Steigerung bzw. eine ausreichende Wärmeableitung bzw. ein Wärmedurchfluss erreichbar ist. Beispielsweise kann in Z-Richtung eine Wärmeleitfähigkeit von mindestens 3 W/mK, insbesondere mindestens 5 W/mK erreicht werden. Ferner hat das erfindungsgemäße Wärmeleitlaminat durch eine entsprechende Wahl der Zwischenlage 4, 6, insbesondere wenn diese beispielsweise aus Kupfer, Silber oder weiteren Metallen mit einer Permeabilitätszahl von kleiner 5 verwendet wird, eine signifikante Schirmwirkung gegen elektrische, magnetische oder elektromagnetische Felder in Z-Richtung.

## Patentansprüche

1. Mehrlagiges flexibles Wärmeleitlaminat (1) bestehend aus einer ersten Grafitfolien-Lage (2), einer von der ersten Lage (2) zumindest bereichswise beabstandeten zweiten Grafitfolien-Lage (3) sowie einer Zwischenlage (4), die zwischen der ersten und der zweiten Grafitfolien-Lage (2, 3) angeordnet ist, wobei die erste Grafitfolien-Lage (2), die Zwischenlage (4) und die zweite Grafitfolien-Lage (3) miteinander laminiert sind.

2. Wärmeleitlaminat nach Anspruch 1,
**dadurch gekennzeichnet, dass**
das Wärmeleitlaminat (1) wenigstens drei Grafitfolien-Lagen (2, 3, 5) aufweist, wobei zwischen den Grafitfolien-Lagen (2, 3, 5) jeweils Zwischenlagen (4, 6) angeordnet sind.

3. Wärmeleitlaminat nach Anspruch 1 oder 2,
**dadurch gekennzeichnet, dass**
das Wärmeleitlaminat (1) eine Wärmeleitfähigkeit senkrecht zur Haupterstreckungsebene des Wärmeleitlaminats (Z-Richtung) von mindestens 3 W/mK, insbesondere mindestens 5 W/mK, insbesondere mindestens 6 W/mK aufweist.

4. Wärmeleitlaminat nach einem der Ansprüche 1 ― 3,
**dadurch gekennzeichnet, dass**
die Gesamtdicke (7) des Wärmeleitlaminats (1) zwischen 0,10 und 5,00 mm, insbesondere zwischen 0,25 und 0,50 mm beträgt.

5. Wärmeleitlaminat nach einem der vorhergehenden Ansprüche,
**dadurch gekennzeichnet, dass**
die Zwischenlage (4, 6) eine Dicke von 0,010 und 0,500 mm, insbesondere eine Schichtdicke (8) von 0,016 ― 0,020 mm aufweist.

6. Wärmeleitlaminat nach einem der vorhergehenden Ansprüche,
**dadurch gekennzeichnet, dass**
das Wärmeleitlaminat (1) einen thermischen Widerstand senkrecht zur Haupterstreckungsebene des Wärmeleitlaminats (Z-Richtung) von 0,08 bis 0,50 K/W, insbesondere von 0,14 ― 0,18 K/W aufweist.

7. Wärmeleitlaminat nach einem der vorhergehenden Ansprüche,
**dadurch gekennzeichnet, dass** wenigstens eine Zwischenlage (4, 6) zumindest bereichsweise aus Metall besteht mit einer spezifischen Leitfähigkeit von wenigstens 3 x 10⁵ Ω⁻¹ cm⁻¹ bei 20°C.

8. Wärmeleitlaminat nach einem der vorhergehenden Ansprüche,
**dadurch gekennzeichnet, dass**
wenigstens eine Zwischenlage (4, 6) zumindest bereichsweise als Folie, Gitter, Gewebe oder Gelege ausgebildet ist.

9. Wärmeleitlaminat nach Anspruch 8,
**dadurch gekennzeichnet, dass**
wenigstens eine Zwischenlage (4, 6) aus einem insbesondere oberflächenbehandelten Kupfer und/oder Silber besteht.

10. Wärmeleitlaminat nach einem der vorhergehenden Ansprüche,
**dadurch gekennzeichnet, dass**
die Zwischenlage (4, 6) an ihren Oberflächen (11) einen höheren Rauheitsgrad aufweist als die erste und/oder die zweite Grafitfolien-Lage (2, 3).

11. Wärmeleitlaminat nach einem der vorhergehenden Ansprüche,
**dadurch gekennzeichnet, dass**
wenigstens zwischen einer Grafitfolien-Lage (2, 3) und einer Zwischenlage (4, 6) ein Primer (13), Kleber und/oder ein Anlösemittel angeordnet ist.

12. Wärmeleitlaminat nach einem der vorhergehenden Ansprüche,
**dadurch gekennzeichnet, dass**
zumindest die Zwischenlage (4, 6) eine höhere Schirmwirkung als die Grafitfolien-Lage (2, 3, 5) aufweist.

13. Wärmeleitlaminat nach einem der vorhergehenden Ansprüche,
**dadurch gekennzeichnet, dass**
die Zwischenlage (4, 6) zumindest bereichsweise von den Grafitfolien-Lagen (2, 3, 5) freiliegt.

14. Verfahren zum Herstellen eines mehrlagigen flexiblen Wärmeleitlaminats (1) bestehend aus wenigstens zwei Grafitfolien-Lagen (2, 3, 5) und wenigstens einer dazwischen angeordneten Zwischenlage (4, 6), wobei zunächst eine erste Grafitfolien-Lage (2, 3, 5) mit der Zwischenlage (4, 6) durch Kalandrierung miteinander verbunden werden und nachfolgend die gebildete Schicht aus der ersten Grafitfolien-Lage (2) und der Zwischenlage (4) mit einer zweiten Grafitfolien-Lage (3) auf der der ersten Grafitfolien-Lage (2) gegenüberliegenden Seite der Zwischenlage (4) durch Kalandrieren verbunden werden und wobei die Grafitfolien-Lagen (2, 3) in nicht hochverdichteten Zustand dem Kalandriervorgang zugeführt werden.

15. Verwendung eines flexiblen Wärmeleitlaminats (1) nach einem der Ansprüche 1 - 13, in einer Stanzvorrichtung zur Herstellung von Wärmeleitlaminatabschnitten oder Ausnehmungen in Wärmeleitlaminatabschnitten.
